# EUROPÄISCHE PATENTSCHRIFT

(11) **EP 1 407 173 B1**
(45) Veröffentlichungstag und Bekanntmachung des Hinweises auf die Patenterteilung: **25.08.2010**
(21) Anmeldenummer: 02787411.4
(22) Anmeldetag: 26.06.2002
(51) Int. Cl.: F16J 9/00, F16J 1/09

(54) **GEKÜHLTER RINGTRÄGER FÜR EINEN KOLBEN**
COOLED RING CARRIER FOR A PISTON
SUPPORT ANNULAIRE REFROIDI DESTINE A UN PISTON

(30) Priorität: 14.07.2001 DE 10134293
(43) Veröffentlichungstag der Anmeldung: 14.04.2004
(73) Patentinhaber: MAHLE GMBH, 70376 Stuttgart (DE)
(72) Erfinder: BING, Karlheinz, 71686 Remseck (DE)
(74) Vertreter: Pohle, Reinhard
(86) Internationale Anmeldenummer: PCT/DE2002/004370
(87) Internationale Veröffentlichungsnummer: WO 2003/021137

(56) Entgegenhaltungen:
- DE-A- 19 750 021

## Beschreibung

Die Erfindung betrifft einen gekühlten Ringträger für einen Kolben eines Dieselmotors nach dem Oberbegriff des Anspruchs 1.

Ein derartiger Ringträger ist aus der DE 197 50 021 bekannt.

Ringträger werden vor dem Umgießen mit Kolbenmaterial in einer Aluminium-Silicium-Schmelze getaucht, wobei sich eine sogenannte Alfin-Schicht, bestehend aus Eisenaluminiden, bildet. Diese Alfinschicht dient als Bindeschicht zwischen Kolbenmaterial und Ringträgermaterial.

Es hat sich nun gezeigt, daß bei der Ausbildung der Alfinschicht teilweise aus dem Ringträger infolge von temperaturbedingtem Überdruck und Gasdurchlässigkeit des Niresist-Materials Luft austritt und es zur Oxidbildung am Kühlkanal kommt. Daher gelingt die Ausbildung einer guten Alfinschicht nicht in allen Fällen.

Die Erfindung beschäftigt sich daher mit dem Problem, Oxidbildung am Ringträger beim Alfinieren zu vermeiden. Dieses Problem wird gelöst durch das kennzeichnende Merkmal des Anspruchs 1. Vorteilhafte Weiterbildungen sind Gegenstand der Unteransprüche.

Grundgedanke der Erfindung ist es, den zum Blechkühlkanal hin weisenden Bereich des Ringträgers zu beschichten, um beim Alfinieren ein Austreten von Luft durch das Ringträgermaterial hindurch zu verhindern. Die Beschichtung erfolgt vorteilhaft durch Elektroplattieren.

Die Erfindung wird im folgenden anhand eines Ausführungsbeispiels näher erläutert.

Es zeigt:

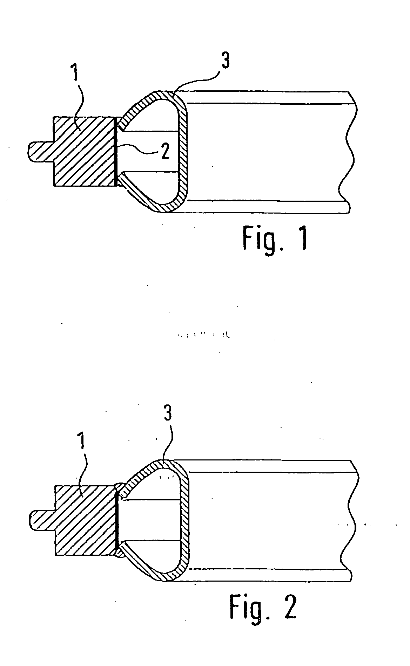

- Fig. 1 und Fig. 2: einen gekühlten Ringträger.

Der Ringträgerteil 1 ist mit dem zum Ringträgerteil hin offenen Blechteil 3 verschweißt. An seiner nach radial innen weisenden Fläche weist der Ringträgerteil eine Beschichtung 2 auf, sodaß der Ringträgerteil zum Blechteil hin gasdicht ist. Das Blechteil 3 besteht aus V2A-Stahl oder ähnlichen Werkstoffen und ist gasdicht. Als Schichtwerkstoffe kommen insbesondere Nickel-, Chrom- oder Eisenwerkstoffe in Frage.

## Patentansprüche

1. Gekühlter Ringträger für einen Kolben eines Dieselmotors mit einem Ringträgerteil (1) und einem Blechteil (3), das mit dem Ringträgerteil (1) verschweißt ist und das zum Ringträgerteil (1) hin offen ist und gemeinsam mit dem Ringträgerteil (1) einen geschlossenen Kühlkanal bildet,
**dadurch gekennzeichnet,**
**daß** die zum Blechteil (3) hin weisende Oberfläche des Ringträgerteils (1) zumindest teilweise beschichtet ist.

2. Gekühlter Ringträger für einen Kolben eines Dieselmotors nach Anspruch 1,
**dadurch gekennzeichnet,**
**daß** die Beschichtung (2) zumindest auf dem Ringträgerrücken aufgebracht ist.

## Claims

1. Cooled ring carrier for a piston of a diesel engine, comprising a ring carrier part (1) and a sheet metal part (3) which is welded to the ring carrier part (1) and is open toward the ring carrier part (1) and, together with the ring carrier part (1), forms a closed cooling channel,
**characterised in that**
the surface of the ring carrier part (1) facing toward the sheet metal part (3) is at least partially coated.

2. Cooled ring carrier for a piston of a diesel engine according to claim 1,
**characterised in that**
the coating (2) is applied at least onto the rear of the ring carrier.

## Revendications

1. Support annulaire refroidi pour un piston d'un moteur Diesel, comportant une pièce de support annulaire (1) et une pièce en tôle (3), qui est soudée à la pièce de support annulaire (1) et qui est ouverte vers la pièce de support annulaire (1) et forme, en commun avec la pièce de support annulaire (1), un canal de refroidissement fermé,
**caractérisé en ce que**
la surface de la pièce de support annulaire (1) tournée vers la pièce en tôle (3) est au moins partiellement revêtue.

2. Support annulaire refroidi pour un piston d'un moteur Diesel selon la revendication 1,
**caractérisé en ce que**
le revêtement (2) est appliqué au moins sur le dos du support annulaire.
